# EUROPÄISCHE PATENTSCHRIFT

(11) **EP 3 012 095 B1**
(45) Veröffentlichungstag und Bekanntmachung des Hinweises auf die Patenterteilung: **13.09.2017**
(21) Anmeldenummer: 15175389.4
(22) Anmeldetag: 06.07.2015
(51) Int. Cl.: B29D 30/58, B29D 30/60, B29D 30/30, B60C 11/00, B60C 19/08, B29D 30/52, B29K 105/00

(54) **VERFAHREN ZUR HERSTELLUNG EINES FAHRZEUGLUFTREIFENS UND FAHRZEUGLUFTREIFEN**
METHOD FOR MANUFACTURING A PNEUMATIC TYRE FOR A VEHICLE AND PNEUMATIC TYRE FOR A VEHICLE
PROCEDE DE FABRICATION D'UN PNEU DE VEHICULE ET PNEU DE VEHICULE

(30) Priorität: 21.10.2014 DE 102014221394
(43) Veröffentlichungstag der Anmeldung: 27.04.2016
(73) Patentinhaber: Continental Reifen Deutschland GmbH, 30165 Hannover (DE)
(72) Erfinder: Liu, Fei, 30173 Hannover (DE); Kastens, Sven, 30890 Barsinghausen (DE); Kendziorra, Norbert, 30827 Garbsen (DE)
(74) Vertreter: Widjaja, Wira

(56) Entgegenhaltungen:
- EP-A1- 1 857 262
- DE-A1- 19 802 088
- DE-A1-102007 004 327
- JP-A- 2004 082 766
- JP-A- 2013 193 580
- US-A1- 2008 283 165

## Beschreibung

Die Erfindung betrifft ein Verfahren zur Herstellung eines Fahrzeugluftreifens mit einem in radialer Richtung mehrschichtigen Laufstreifen aus einer zumindest einschichtigen Laufstreifencap und einer Laufstreifenbase , wobei zumindest die Laufstreifencap aus einer elektrisch nicht leitfähigen Gummimischung besteht und ein- oder mehrschichtig durch Spulen von zumindest einem Materialstreifen aus einer elektrisch nicht leitenden Kautschukmischung hergestellt wird, und wobei während des Spulvorganges elektrisch leitfähiges Material eingebracht wird, welches im vulkanisierten Reifen zwischen der Außenseite des Laufstreifens und der Laufstreifenbase oder der Schicht, auf welcher sich die Laufstreifenbase befindet, eine Verbindung herstellt.

Um den Rollwiderstand von Fahrzeugluftreifen zu reduzieren, ist es üblich, in mehrschichtigen Laufstreifen zumindest in der radial äußersten Schicht als Füllstoff Silica (Kieselsäure) zu verwenden, welche den sonst üblichen Ruß zumindest zum Teil ersetzt. Diese Laufstreifenschicht(en) ist bzw. sind daher elektrisch nicht oder kaum mehr leitfähig, sodass die am Fahrzeug montierten Reifen durch elektrostatische Aufladungen unangenehme Entladungsvorgänge verursachen können. Es ist daher üblich, bei solchen Fahrzeugluftreifen im Laufstreifen elektrisch leitfähige Passagen einzubauen, die elektrisch leitende Verbindungen zwischen der Außenfläche des Laufstreifens und einer elektrisch leitfähigen Schicht im Laufstreifen oder dem elektrisch leitfähigen Unterbau herstellen.

Ein Verfahren der eingangs genannten Art ist beispielsweise aus der EP 2 125 351 B1 bekannt. Als elektrisch leitfähiges Material wird eine elektrisch leitfähige Kautschukmischung verwendet, welche während des Spulens des Materialstreifens für die radial äußerste Schicht, die Laufstreifencap, und zwar vor dem Auflegen desselben, auf zumindest eine der Seiten des Materialstreifens aufgebracht wird. Dabei wird die elektrisch leitfähige Kautschukmischung entweder direkt auf den Materialstreifen gespritzt oder es werden Profilstücke aus der elektrisch leitfähigen Kautschukmischung unter gegenseitigen Abständen auf den Materialstreifen aufgebracht. Die Profilstücke bilden im fertigen Reifen eine Kette aus elektrisch leitfähigen Passagen. Der Materialstreifen kann auch U-förmig von einer elektrisch leitfähigen Kautschukmischung eingefasst werden, wobei zumindest einer der U-Schenkel breiter ist als der Materialstreifen. Bei dem aus der EP 2 027 991 B1 bekannten Verfahren wird ein Abschnitt bzw. Teil der Laufstreifencap, insbesondere eine Hälfte, als Profil extrudiert, an der inneren Stirnfläche des Profils ein elektrisch leitfähiges Material aufgebracht und dieser Teil mit dem zweiten, ebenfalls als Profil extrudierten Teil der Laufstreifencap zur kompletten Laufstreifencap zusammengefügt. Das elektrisch leitfähige Material kann als Lösung aufgesprüht oder aufgestrichen werden oder es kann als Pulver oder Granulat anhaftend angebracht werden. Aus der US 7,029,544 B2 ist es bekannt, im Laufstreifen vor der Vulkanisation des Reifens lokal Löcher oder Schlitze zu erstellen, in welche anschließend elektrisch leitfähiges Material, beispielsweise eine Dispersion von Ruß in Öl, eingespritzt wird.

Aus der US 2008/0283165 A1 ist ein Fahrzeugluftreifen mit einem in radialer Richtung dreischichtigen Laufstreifen bekannt. Bei der Herstellung des Fahrzeugluftreifens werden die Schichten des Laufstreifens nacheinander aufgewickelt, wobei in jede Schicht ein elektrisch leitfähiger Materialstreifen eingebracht wird. Die elektrisch leitfähigen Materialstreifen können beispielsweise aus ein- oder beidseitig elektrisch leitfähig beschichteten Materialstreifen gebildet werden. Im fertigen Reifen kontaktieren die in benachbarten Laufstreifenschichten angeordneten elektrisch leitfähigen Materialstreifen einander.

Aus der JP 2004 82766 A ist ein Fahrzeugluftreifen mit einem Laufstreifen bekannt, in welchem ein unter einem spitzen Winkel zur Umfangsrichtung über den Reifenumfang verlaufender elektrisch leitfähiger Streifen eingebaut ist.

Die EP 1 857 262 A1 offenbart einen Fahrzeugluftreifen, bei welchem der nicht leitende Laufstreifen eine in Umfangsrichtung umlaufende elektrische leitende Zone aufweist, die bei der Herstellung des Reifens durch eine auf Trennflächen des Laufstreifens aufgebrachte Lösung aus Kautschuk erzeugt worden ist.

Aus der JP 2013 193 580 A ist ein weiteres Verfahren zur Herstellung eines Fahrzeugluftreifens bekannt, bei welchem der Laufstreifen aus einem Materialstreifen aus einer elektrisch nicht leitenden Kautschukmischung unter Freilassung einer über den Reifenumfang verlaufenen Lücke gespult wird. In die Lücke wird ein im fertigen Reifen bis zur Laufstreifenaußenfläche reichendes streifenförmiges elektrisch leitfähiges Material eingebracht.

Ein weiteres Verfahren zur Herstellung eines Fahrzeugluftreifens ist aus der DE 198 02 088 A1 bekannt. Bei diesem Verfahren wird ein extrudierter Laufstreifen in axialer Richtung geteilt. Die sich Trennflächen der Laufstreifenteile werden mit einer elektrisch leitfähigen Lösung benetzt und anschließend entlang ihrer Trennflächen miteinander verbunden, sodass im fertigen Fahrzeugluftreifen im Bereich des Laufstreifens eine filmschichtartige elektrisch leitfähige Zone vorhanden ist.

Der Erfindung liegt die Aufgabe zugrunde, elektrisch leitfähige Passagen in einen mehrschichtig aufgebauten Laufstreifen, bei welchem zumindest die radial äußerste Schicht durch einen Stripwinding-Prozess aufgebaut wird, auf besonders einfache und rationelle Weise einbringen zu können.

Gelöst wird die gestellte Aufgabe erfindungsgemäß dadurch, dass ein Abschnitt der Laufstreifencap in axialer Richtung gespult wird, das elektrisch leitfähige Material in Streifen über den Umfang aufgebracht wird, wobei Streifenabschnitte auf der Laufstreifenbase, ggf. auch auf der Schicht radial innerhalb der Laufstreifenbase, und Streifenabschnitte sowohl auf der zuletzt gespulten Windung der Laufstreifencap als auch auf dem außen frei liegenden Abschnitt der der zuletzt gespulten Windung benachbarten und bereits überlappten Windung des Materialstreifens der Laufstreifencap verlaufen, und wobei anschließend die Laufstreifencap fertig gespult wird.

Gemäß der Erfindung werden daher Streifen aus elektrisch leitendem Material derart appliziert, dass im vulkanisierten Reifen verlässlich leitfähige Passagen zwischen der Außenfläche des Laufstreifens und elektrisch leitfähigem Gummimaterial im Laustreifeninneren oder radial innerhalb des Laufstreifens vorhanden sind. Das Verfahren gestattet es, das elektrisch leitfähige Material während des Stripwinding-Prozesses der Laufstreifencap, ohne diesen unterbrechen zu müssen, anzuwenden. Das Aufbringen des leitfähigen Materials kann quasi synchron beim Stripwinding-Prozess des Materialstreifens der Laufstreifencap erfolgen, indem der Materialstreifen der Laufstreifencap unmittelbar nach dem Aufbringen des elektrisch leitfähigen Materials aufgelegt wird. Dadurch dass Streifenabschnitte auch auf den außen freiliegenden Abschnitt der der zuletzt gespulten Windung benachbarten und bereits überlappten Windung des Materialstreifens der Laufstreifencap aufgebracht werden, ist sichergestellt, dass im vulkanisierten Reifen an der Laufstreifenaußenfläche auf jeden Fall elektrisch leitfähige Stellen vorhanden sind, die in Verbindung mit den durch die Laufstreifencap verlaufenden elektrisch leitfähigen Passagen sind.

Bei einer bevorzugten Ausführungsform der Erfindung wird das elektrisch leitfähige Material in separaten, über den Umfang des Laufstreifens voneinander beabstandeten Streifen aufgebracht. Auf diese Weise lassen sich einzelne, über den Umfang unter gegenseitigen Abständen angeordnete, elektrisch leitfähige Passagen auf besonders rationelle Weise herstellen. Die Streifen können dabei wahlweise quer zur Umfangsrichtung oder unter einem spitzen Winkel zur Umfangsrichtung verlaufend aufgebracht werden.

Bei einer alternativen Ausführungsform der Erfindung sind die Streifen Abschnitte eines über den Umfang des Laufstreifens insbesondere schleifen- oder zickzackförmig aufgebrachten Bandes aus dem elektrisch leitfähigen Material.

Eine Laufstreifenbase, die aus einer elektrisch leitfähigen Kautschukmischung hergestellt wird, wird vorzugsweise lückenlos aus einem Materialstreifen über die gesamte Breite des Laufstreifens hergestellt, die Streifenabschnitte aus dem elektrisch leitfähigen Material können demnach auf die Laufstreifenbase appliziert werden.

Bei einer weiteren Ausführungsform der Erfindung, bei der die Laufstreifenbase aus einem Materialstreifen aus einer elektrisch nicht leitfähigen Kautschukmischung hergestellt wird, wird dieser Materialstreifen unter Freilassung von zumindest einer über den Umfang verlaufenden Lücke auf die Gürtelbandage bzw. die radial äußerste Gürtellage aufgebracht, anschließend die Laufstreifencap über einen ersten Abschnitt, welcher bis zur Lücke reicht, gespult und anschließend wird das elektrisch leitfähige Material gemäß der Erfindung in Streifen abschnittsweise auf der Gürtelbandage bzw. der radial äußersten Gürtellage und abschnittsweise auf die bei der Lücke befindlichen Windungen der Laufstreifenbase und der Laufstreifencap appliziert. Auf diese Weise entstehen verlässlich elektrisch leitfähige Passagen zwischen dem Unterbau - der Gürtelbandage oder der radial äußersten Gürtellage - und der Laufstreifenaußenfläche.

Das erfindungsgemäße Verfahren ist auch bei Laufstreifen anwendbar, deren Laufstreifencap mehrschichtig, insbesondere zweischichtig gespult wird.

Das elektrisch leitfähige Material, das im Rahmen des erfindungsgemäßen Verfahrens vorteilhaft einsetzbar ist, enthält insbesondere elektrisch leitfähige Partikel, wobei diese Partikel Rußpartikel, Carbonnanotubes, Carbonfasern oder sonstige elektrisch leitfähige Partikel, insbesondere Nanopartikel, sein können.

Bei einer möglichen Ausführungsform der Erfindung kann das elektrisch leitfähige Material als Pulver anhaftend in Streifenform aufgebracht werden.

Bei einer bevorzugten Ausführungsform der Erfindung ist das elektrisch leitfähige Material jedoch eine Dispersion mit einem flüssigen Dispersionsmedium. Das flüssige Dispersionsmedium ist bevorzugterweise ein Öl, insbesondere Rapsöl, MES-Öl, TDAE-Öl, RAE-Öl oder ein paraffinisches Öl.

Besonders bevorzugt ist es, wenn die Dispersion zumindest ein Polymer, insbesondere ein Flüssigpolymer, beispielsweise flüssigen Isoprenkautschuk oder flüssigen Butadienkautschuk, enthält. Auf diese Weise kann ein oberflächliches Einbinden des elektrisch leitfähigen Materials in die umgebende Gummimatrix bei der Vulkanisation des Reifens begünstigt werden. In diesem Zusammenhang ist es besonders vorteilhaft, wenn die zumindest ein Polymer enthaltende Dispersion ein Vulkanisationssystem, insbesondere ein solches, welches aus fein gemahlenen Substanzen besteht, wie Schwefel, Beschleuniger, Zinkoxid und Stearinsäure. Flüssigpolymere bieten zudem den Vorteil, dass sie die Viskosität der Dispersion herabsetzen und dadurch das Aufbringen der Streifen erleichtern.

Die Erfindung betrifft ferner einen Fahrzeugluftreifen mit einem eine elektrisch leitfähige Laufstreifenbase und eine elektrisch nicht leitfähige Laufstreifencap aufweisenden Laufstreifen sowie ferner einen Fahrzeugluftreifen mit einem eine elektrisch nicht leitfähige Laufstreifenbase und eine elektrisch nicht leitfähige Laufstreifencap aufweisenden Laufstreifen, wobei der Laufstreifen jeweils gemäß dem erfindungsgemäßen Verfahren hergestellt ist.

Weitere Merkmale, Vorteile und Einzelheiten der Erfindung werden nun anhand der Zeichnung, die schematisch Ausführungsbeispiele darstellt, näher beschrieben. Dabei zeigen
Fig. 1 eine Ausführungsform der Erfindung anhand einer Ansicht eines Umfangsabschnittes eines Laufstreifens eines Fahrzeugluftreifens während seiner Herstellung,
Fig. 2 eine weitere Ausführungsform der Erfindung anhand eines Querschnitt eines Laufstreifens während seiner Herstellung und
Fig. 3 eine Ansicht einer im Rahmen des erfindungsgemäßen Verfahrens einsetzbaren Vorrichtung.

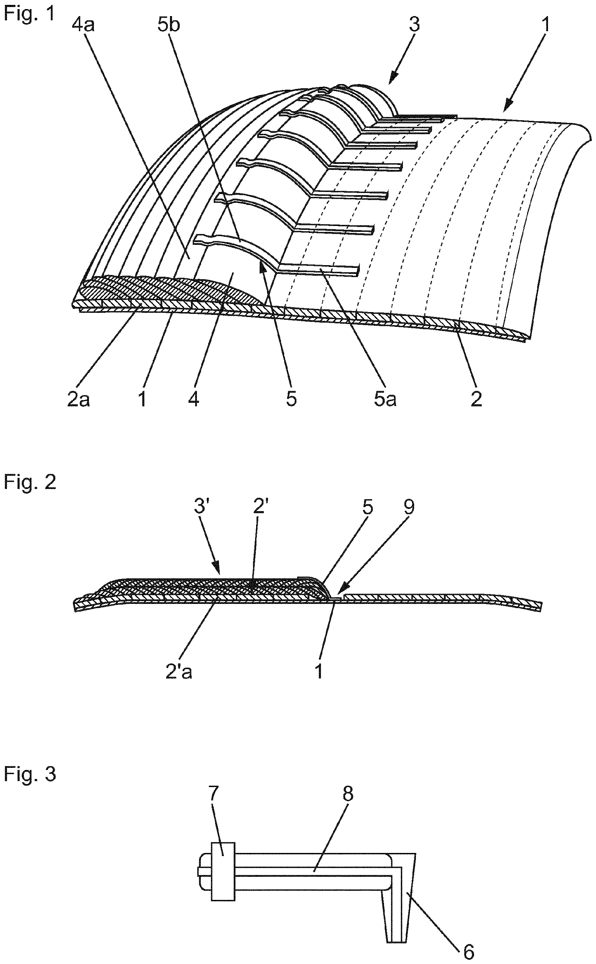

Fig. 1 zeigt schematisch einen Umfangsabschnitt mit einem Querschnitt durch einen unvulkanisierten, noch nicht zur Gänze aufgebauten Laufstreifen eines Fahrzeugluftreifens, insbesondere für Personenkraftwagen, in Radialbauart. Der Laufstreifen wird zweischichtig aus einer Laufstreifenbase 2 und einer Laufstreifencap 3 auf einem vorgefertigten Gürtelverband, insbesondere auf einer Gürtelbandage 1, aufgebaut. Der ansonsten nicht dargestellte Gürtelverband kann mehrere in an sich bekannter Weise aufgebaute, mit Festigkeitsträgern verstärkte Gürtellagen und als radial äußerste Lage die Gürtelbandage 1 aufweisen. Die weiteren Bauteile des Reifens, wie eine Radialkarkasse, eine Innenschicht, Seitenwände und die in Wulstbereichen vorgesehenen Bauteile sind nicht dargestellt. Die Laufstreifenbase 2 wird insbesondere durch Stripwinding hergestellt, daher durch spiraliges "Spulen", eines Materialstreifens 2a aus einer Kautschukmischung, welcher Stoß an Stoß in Umfangsrichtung auf die Gürtelbandage 1 gewickelt wird. Bei der in Fig. 1 gezeigten Ausführungsform besteht die Kautschukmischung der Laufstreifenbase 2 aus einer elektrisch leitfähigen, Ruß enthaltenden Kautschukmischung. Der Reifen ist in jedem Fall derart aufgebaut, dass zwischen der Laufstreifenbase 2 und der metallischen Felge, auf welcher der Reifen montiert wird, eine elektrisch leitende Verbindung besteht.

Die Laufstreifencap 3 wird durch spiraliges Wickeln eines Materialstreifens 4 auf die Laufstreifenbase 2 hergestellt. Der Materialstreifen 4 ist aus einer elektrisch nicht oder nur sehr schlecht leitfähigen Kautschukmischung hergestellt und enthält als Füllstoff insbesondere Kieselsäure und keinen oder höchstens einen sehr geringen Anteil an Ruß. Die Laufstreifencap 3 wird, wie es Fig. 1 zeigt, aus in Umfangsrichtung umlaufenden Windungen des Materialstreifens 4 unter gegenseitiger Überlappung der einzelnen Windungen hergestellt, wobei von jeder Windung ein schmaler Abschnitt 4a an der Außenfläche verbleibt. Das Spulen der Laufstreifencap 3 erfolgt bei der in Fig. 1 gezeigten Ausführung von einem Rand, hier dem linken Rand, der Laufstreifenbase 2 ausgehend. Fig. 1 zeigt ein Stadium des Spulvorganges, bei dem in axialer Richtung fast die Hälfte der Laufstreifencap 3 aufgebaut worden ist. Im gezeigten Beispiel werden in diesem Stadium schmale Streifen 5 aus einem elektrisch leitenden Material, bei der in Fig. 1 gezeigten Ausführung parallel zueinander, quer zur Umfangsrichtung der Laufstreifens 1 und unter einem gegenseitigen Abstand, über den gesamten Umfang derart appliziert, dass sich ein Streifenabschnitt 5a auf der Laufstreifenbase 2 und ein Streifenabschnitt 5b auf der soeben hergestellten Windung der Laufstreifencap 3 befindet und diese Windung komplett überquert. Dabei können die Streifenabschnitte 5b auch zumindest auf einen Teilbereich des Abschnittes 4a der benachbarten, schon überlappten Windung aufgebracht werden. Im vulkanisierten Reifen befinden sich demnach an der Laufstreifenaußenfläche elektrisch leitfähige Stellen, in der Laufstreifencap 3 verlaufen elektrisch leitfähige Passagen zur Laufstreifenbase 2. Der gegenseitige Abstand der Streifen 5 wird derart gewählt, dass der vulkanisierte und an einem Fahrzeug montierte Reifen jeweils mit zumindest einer seiner elektrisch leitfähigen Stellen in Kontakt mit dem Untergrund kommt.

Das Aufbringen der Streifen 5 kann synchron während des Stripwinding-Prozesses des Materialstreifens 4, knapp bevor die entsprechende Windung aufgelegt wird, erfolgen. Alternativ kann der Stripwinding-Prozess kurz unterbrochen werden.

Abweichend von der dargestellten Ausführungsform können die Streifen 5 auch unter einem spitzen Winkel zur Umfangs- bzw. Querrichtung ausgebracht werden. Darüber hinaus ist es möglich, das elektrisch leitfähige Material als "endlosen" Streifen bzw. als Band, beispielsweise schleifenförmig oder zickzackförmig mit Abschnitten, die, wie oben beschrieben, zum Teil auf der Laufstreifenbase und zum Teil zumindest auf der soeben erstellten Windung der Laufstreifencap verlaufen, über den Umfang durchgehend aufzubringen.

Fig. 2 zeigt schematisch eine weitere Ausführungsvariante der Erfindung, bei der die Laufstreifenbase 2' aus einem Materialstreifen 2'a aus einer elektrisch nicht leitfähigen Kautschukmischung auf der Gürtelbandage 1 oder alternativ auf der radial äußersten Gürtellage gewickelt wird. Dabei wird an zumindest einer Stelle, bei der gezeigten Ausführungsform etwa in der Mitte, eine Lücke 9 freigelassen, die insbesondere über den gesamten Umfang der Gürtelbandage 1 verläuft. die Lücke 9 weist vorzugsweise zumindest die Breite einer Windung auf und wird beispielsweise durch ein Unterbrechen des Spulens der Laufstreifenbase 2' und neuerliches Fortsetzen des Wickelvorganges im Abstand der Lücke 9 hergestellt. Alternativ kann die Lücke 9 durch das Spulen von zwei Windungen unter einem gegenseitigen Abstand erstellt werden. Auf die derart durch Stripwinding erzeugte Laufstreifenbase 2' wird der Materialstreifen 4' für die Laufstreifencap 3', bei der gezeigten Ausführungsform in zwei Schichten übereinander, gewickelt. Dabei wird vorerst die innere Schicht bis zur Lücke 9, gegebenenfalls geringfügig über die Lücke 9 ragend, gewickelt und anschließend auf diese Schicht die zweite Schicht gewickelt, jeweils unter gegenseitiger Überlappung der einzelnen Windungen, wie oben beschrieben. Auf diese Weise wird ein axialer Abschnitt des Laufstreifens mit der zweischichtigen Laufstreifencap 3' hergestellt. Nun werden analog wie bei der ersten Ausführungsform schmale Streifen 5 aus dem elektrisch leitenden Material, beispielsweise analog zu der in Fig. 1 gezeigten Ausführung, parallel zueinander, quer zur Umfangsrichtung des Laufstreifens und unter einem gegenseitigen Abstand über den gesamten Umfang derart appliziert, dass sich ein Streifenabschnitt 5a durch die Lücke 9 hindurch auf der Gürtelbandage 1' und ein Streifenabschnitt 5b auf den Windungen der beiden Capschichten befindet. Der Streifenabschnitt 5b muss derart aufgebracht werden, dass im fertig vulkanisierten Reifen an der Laufstreifenaußenfläche elektrisch leitfähige Stellen vorhanden sind. Auch bei dieser Ausführungsform kann anstelle eines Streifens das elektrisch leitfähige Material als endloser Streifen in Schleifenform oder zickzackförmig mit Abschnitten, die zum Teil auf der Gürtelbandage 1 und zum Teil bis auf die Windungen der Laufstreifencap 3' verlaufen, über den Umfang durchgehend aufgebracht werden. Bei dieser Ausführungsform ist es vorteilhaft, wenn für das Aufbringen der Streifen 5 oder des endlosen Streifens der Stripwinding-Prozess der Laufstreifencap 3' kurz unterbrochen wird. Nach dem Applizieren der Streifen 5 bzw. des endlosen Streifens aus elektrisch leitfähigem Material wird die Laufstreifencap 3' durch Fortsetzen des Stripwinding-Prozesses fertig aufgebaut.

Das elektrisch leitfähige Material wird vorzugsweise als dünner Film und in der Form einer Flüssigkeit - einer Dispersion mit einem flüssigen Dispersionsmedium- oder eines Pulvers aufgebracht. Sowohl die Dispersion als auch das Pulver enthalten elektrisch leitfähige Partikel, insbesondere Ruß, beispielsweise Ruß N 339 oder N 121, Carbonnanotubes, Carbonfasern oder sonstige elektrisch leitfähige Partikel, beispielsweise auch entsprechende Nanopartikel. Das flüssige Dispersionsmedium der Dispersion kann vor allem eine Flüssigkeit sein, die üblicherweise in Laufstreifenmischungen verwendet wird, wie beispielsweise Rapsöl, MES-Öl, TDAE-Öl, RAE-Öl, paraffinisches Öl oder dergleichen. Es können ferner weitere flüssige oder niedrigschmelzende mit Kautschuk chemisch verträgliche Dispersionsmedien verwendet werden, beispielsweise hochsiedende n-Alkane und iso-Alkane oder Alkene. Auch Weichmacherester mit entsprechenden Schmelz- und Siedepunkten können verwendet werden. Es kann daher das flüssige Dispersionsmedium vom Laufstreifenmaterial nach Applikation der Dispersion absorbiert werden, die an der Oberfläche jeweils verbleibenden Partikelschichten bilden die oben erwähnten elektrisch leitfähigen Stellen an der Laufstreifenaußenfläche und die leitenden Passagen zwischen der Laufstreifenaußenfläche und der Laufstreifenbase bzw. dem Gürtel.

Auf Öl als Dispersionsmedium basierende Dispersionen können ferner ein oder mehrere Polymer(e) beinhalten, wobei es optional möglich ist, das Gemisch mit einem Vulkanisationssystem auszustatten, um eine Vernetzung des Polymeranteils bei der Vulkanisation zu erzielen. Diese Maßnahme kann möglichen Trennungen der gespulten Materialstreifen nach der Vulkanisation vorbeugen. Bevorzugt wird dabei ein Vulkanisationssystem verwendet, welches auf fein gemahlenen Partikeln aus den entsprechenden Substanzen, wie Schwefel, Beschleuniger, beispielsweise CBS oder TBbS, Zinkoxid, vorzugsweise Nano-Zinkoxid, und Stearinsäure basiert. Zu den bevorzugten Polymeren gehören Flüssigpolymere, die zu einer Reduktion der Viskosität der Dispersion beitragen, wobei insbesondere Flüssigpolymere mit einem höheren Molekulargewicht ( > 10000 g/Mol) verwendet werden, wie beispielsweise flüssiger Isoprenkautschuk oder flüssiger Butadienkautschuk.

Es ist von Vorteil, die Dispersion vor dem Aufbringen etwas zu erwärmen, um die Migrationszeit der flüssigen Komponente zu verringern und die Viskosität der Dispersion zur Erleichterung der Applikation herabzusetzen. Der Dispersion kann ferner ein Elastomer zugefügt werden, um beim Vulkanisieren ein optimales Einbinden der elektrisch leitfähigen Partikel in die Gummimatrix zu unterstützen.

Fig. 3 zeigt schematisch eine Ansicht einer Vorrichtung zum Aufbringen einer elektrisch leitfähigen Dispersion. Die Vorrichtung umfasst eine Sprühdüse 6 und eine Pumpe 7, die in einem Schlauch oder Röhrchen 8 die Dispersion zur Sprühdüse 6 transportiert. Zum Aufsprühen kann auch das Funktionsprinzip des Ink-Jet-Verfahrens angewendet werden, bei welchem aus einer Vielzahl von Düsen Dispersionstropfen in hoher Frequenz aufgespritzt werden.

Der fertig aufgebaute Reifen wird in bekannter Weise in einer Vulkanisationsform ausvulkanisiert, wobei in die Laufstreifencap 3 eine Profilierung mit Rillen, Einschnitten und dergleichen eingeprägt wird.

Abweichend von der dargestellten Ausführungsform ist es ferner möglich, an mehreren Stellen über den Umfang des Laufstreifens auf die beschriebene und erfindungsgemäße Weise elektrisch leitfähiges Material einzubringen. Dabei ist es auch möglich, das elektrisch leitfähige Material jeweils in Teilabschnitten des Umfanges aufzubringen. Auf diese Weise kann gezielt ein Ausbilden elektrisch leitfähiger Passagen an Profilpositiven (Blöcken, Profilbändern) erfolgen.

### Bezugsziffernliste

- 1, 1': Gürtelbandage
- 2, 2': Laufstreifenbase
- 2a, 2'a: Materialstreifen
- 3, 3': Laufstreifencap
- 4, 4': Materialstreifen
- 4a: Abschnitt
- 5: Streifen
- 5a, 5b: Streifenabschnitt
- 6: Sprühdüse
- 7: Pumpe
- 8: Röhrchen
- 9: Lücke

## Patentansprüche

1. Verfahren zur Herstellung eines Fahrzeugluftreifens mit einem in radialer Richtung mehrschichtigen Laufstreifen aus einer zumindest einschichtigen Laufstreifencap (3, 3') und einer Laufstreifenbase (2, 2'), wobei zumindest die Laufstreifencap (3, 3') aus einer elektrisch nicht leitfähigen Gummimischung besteht und ein- oder mehrschichtig durch Spulen von zumindest einem Materialstreifen (4, 4') aus einer elektrisch nicht leitenden Kautschukmischung hergestellt wird, und wobei während des Spulvorganges elektrisch leitfähiges Material eingebracht wird, welches im vulkanisierten Reifen zwischen der Außenseite des Laufstreifens und der Laufstreifenbase (2) oder der Schicht, auf welcher sich die Laufstreifenbase (2) befindet, eine Verbindung herstellt,
**dadurch gekennzeichnet,**
**dass** ein Abschnitt der Laufstreifencap (3, 3') in axialer Richtung gespult wird, das elektrisch leitfähige Material in Streifen über den Umfang aufgebracht wird, wobei Streifenabschnitte (5a) auf der Laufstreifenbase (2), ggf. auch auf der Schicht radial innerhalb der Laufstreifenbase (2'), und Streifenabschnitte (5b) sowohl auf der zuletzt gespulten Windung der Laufstreifencap (3, 3') als auch auf dem außen frei liegenden Abschnitt (4a) der der zuletzt gespulten Windung benachbarten und bereits überlappten Windung des Materialstreifens (4, 4') der Laufstreifencap (3, 3') verlaufen, und wobei anschließend die Laufstreifencap (3, 3') fertig gespult wird.

2. Verfahren nach Anspruch 1, **dadurch gekennzeichnet, dass** das elektrisch leitfähige Material in separaten, über den Umfang des Laufstreifens voneinander beabstandeten Streifen (5) aufgebracht wird.

3. Verfahren nach Anspruch 2, **dadurch gekennzeichnet, dass** die Streifen (5) quer zur Umfangsrichtung oder unter einem spitzen Winkel zur Umfangsrichtung verlaufend aufgebracht werden.

4. Verfahren nach Anspruch 1, **dadurch gekennzeichnet, dass** die Streifen Abschnitte eines über den Umfang des Laufstreifens insbesondere schleifen- oder zickzackförmig aufgebrachten Bandes aus dem elektrisch leitfähigen Material sind.

5. Verfahren nach einem der Ansprüche 1 bis 4, **dadurch gekennzeichnet, dass** die Laufstreifenbase (2) lückenlos aus einem Materialstreifen aus einer elektrisch leitfähigen Kautschukmischung hergestellt wird, wobei Streifenabschnitte (5a) auf der Laufstreifenbase (2) appliziert werden.

6. Verfahren nach einem der Ansprüche 1 bis 5, **dadurch gekennzeichnet, dass** die Laufstreifenbase (2') aus einem Materialstreifen aus einer elektrisch nicht leitfähigen Kautschukmischung (4') hergestellt wird und unter Freilassung von zumindest einer über den Umfang verlaufenden Lücke (9) auf die Gürtelbandage (1) bzw. die radial äußerste Gürtellage aufgebracht wird, wobei die Laufstreifencap (3') über einen ersten Abschnitt, welcher bis zur Lücke (9) reicht, gespult wird und anschließend das elektrisch leitfähige Material in Streifen (5) abschnittsweise auf der Gürtelbandage (1) oder der radial äußersten Gürtellage und abschnittsweise auf die bei der Lücke befindliche(n) Windung(en) der Laufstreifenbase (2') und der Laufstreifencap (3') appliziert wird.

7. Verfahren nach einem der Ansprüche 1 bis 6, **dadurch gekennzeichnet, dass** die Laufstreifencap (2') mehrschichtig, insbesondere zweischichtig, gespult wird.

8. Verfahren nach einem der Ansprüche 1 bis 7, **dadurch gekennzeichnet, dass** das elektrisch leitfähige Material elektrisch leitfähige Partikel enthält.

9. Verfahren nach Anspruch 8, **dadurch gekennzeichnet, dass** die elektrisch leitfähigen Partikel Rußpartikel, Carbonnanotubes, Carbonfasern oder sonstige elektrisch leitfähige Partikel, insbesondere Nanopartikel, sind.

10. Verfahren nach einem der Ansprüche 1 bis 9, **dadurch gekennzeichnet, dass** das elektrisch leitfähige Material als Pulver aufgebracht wird.

11. Verfahren nach einem der Ansprüche 1 bis 9, **dadurch gekennzeichnet, dass** das elektrisch leitfähige Material eine Dispersion mit einem flüssigen Dispersionsmedium ist.

12. Verfahren nach Anspruch 11, **dadurch gekennzeichnet, dass** das flüssige Dispersionsmedium ein Öl, insbesondere Rapsöl, MES-Öl, TDAE-Öl, RAE-Öl oder paraffinisches Öl ist.

13. Fahrzeugluftreifen mit einem eine elektrisch leitfähige Laufstreifenbase (2) und eine elektrisch nicht leitfähige Laufstreifencap (3) aufweisenden Laufstreifen, welcher gemäß dem Verfahren nach einem oder mehreren der Ansprüche 1 bis 12 hergestellt ist.

14. Fahrzeugluftreifen mit einem eine elektrisch nicht leitfähige Laufstreifenbase (2) und eine elektrisch nicht leitfähige Laufstreifencap (3) aufweisenden Laufstreifen, welcher gemäß dem Verfahren nach einem oder mehreren der Ansprüche 1 bis 12 hergestellt ist.

## Claims

1. Method for producing a pneumatic vehicle tyre having a tread which is multi-layered in the radial direction and comprises an at least single-layered tread cap (3, 3') and a tread base (2, 2'), wherein at least the tread cap (3, 3') consists of an electrically non-conductive vulcanized rubber mixture and is produced in one or more layers by winding at least one material strip (4, 4') composed of an electrically nonconducting unvulcanized rubber mixture, and wherein electrically conductive material is introduced during the winding operation and produces a connection in the vulcanized tyre between the outer side of the tread and the tread base (2) or the layer on which the tread base (2) is situated,
**characterized**
**in that** a portion of the tread cap (3, 3') is wound in the axial direction, and the electrically conductive material is applied in strips over the circumference, wherein strip portions (5a) extend on the tread base (2), where appropriate also on the layer radially within the tread base (2'), and strip portions (5b) extend both on the last-wound winding of the tread cap (3, 3') and on the externally exposed portion (4a) of the already overlapped winding, adjacent to the last-wound winding, of the material strip (4, 4') of the tread cap (3, 3'), and wherein the tread cap (3, 3') is then finish-wound.

2. Method according to Claim 1, **characterized in that** the electrically conductive material is applied in separate strips (5) which are spaced apart from one another over the circumference of the tread.

3. Method according to Claim 2, **characterized in that** the strips (5) are applied so as to extend transversely to the circumferential direction or at an acute angle to the circumferential direction.

4. Method according to Claim 1, **characterized in that** the strips are portions of a band composed of the electrically conductive material that is applied, in particular in a loop-like or zigzag-shaped manner, over the circumference of the tread.

5. Method according to one of Claims 1 to 4, **characterized in that** the tread base (2) is produced gaplessly from a material strip composed of an electrically conductive unvulcanized rubber mixture, wherein strip portions (5a) are applied to the tread base (2).

6. Method according to one of Claims 1 to 5, **characterized in that** the tread base (2') is produced from a material strip composed of an electrically non-conductive unvulcanized rubber mixture (4') and is applied to the belt bandage (1) or the radially outermost belt ply while leaving free at least one gap (9) which extends over the circumference, wherein the tread cap (3') is wound over a first portion which reaches up to the gap (9) and the electrically conductive material is then applied in strips (5) in certain portions to the belt bandage (1) or the radially outermost belt ply and in certain portions to the winding(s), situated at the gap, of the tread base (2') and the tread cap (3').

7. Method according to one of Claims 1 to 6, **characterized in that** the tread cap (2') is wound in multiple layers, in particular in two layers.

8. Method according to one of Claims 1 to 7, **characterized in that** the electrically conductive material contains electrically conductive particles.

9. Method according to Claim 8, **characterized in that** the electrically conductive particles are carbon black particles, carbon nanotubes, carbon fibres or other electrically conductive particles, in particular nanoparticles.

10. Method according to one of Claims 1 to 9, **characterized in that** the electrically conductive material is applied as a powder.

11. Method according to one of Claims 1 to 9, **characterized in that** the electrically conductive material is a dispersion having a liquid dispersion medium.

12. Method according to Claim 11, **characterized in that** the liquid dispersion medium is an oil, in particular rapeseed oil, MES oil, TDAE oil, RAE oil or paraffinic oil.

13. Pneumatic vehicle tyre having a tread which comprises an electrically conductive tread base (2) and an electrically non-conductive tread cap (3), which tyre is produced by the method according to one or more of Claims 1 to 12.

14. Pneumatic vehicle tyre having a tread which comprises an electrically non-conductive tread base (2) and an electrically non-conductive tread cap (3), which tyre is produced by the method according to one or more of Claims 1 to 12.

## Revendications

1. Procédé de fabrication d'un pneu de véhicule avec une bande de roulement multicouche en direction radiale composée d'une chape de bande de roulement en au moins une couche (3, 3') et une base de bande de roulement (2, 2'), dans lequel au moins la chape de bande de roulement (3, 3') se compose d'un mélange de caoutchouc électriquement non conducteur et est fabriquée en une ou en plusieurs couche(s) par enroulement d'au moins une bande de matière (4, 4') en un mélange de caoutchouc électriquement non conducteur, et dans lequel on introduit pendant l'opération d'enroulement une matière électriquement conductrice, qui établit une liaison dans le pneu vulcanisé entre le côté extérieur de la bande de roulement et la base de bande de roulement (2) ou la couche sur laquelle la base de bande de roulement (2) se trouve,
**caractérisé en ce que** l'on enroule une partie de la chape de bande de roulement (3, 3') en direction axiale, on dépose la matière électriquement conductrice en bandes sur la périphérie, dans lequel des parties de bande (5a) s'étendent sur la base de bande de roulement (2), éventuellement aussi sur la couche radialement à l'intérieur de la base de bande de roulement (2'), et des parties de bande (5b) s'étendent aussi bien sur la spire enroulée en dernier lieu de la chape de bande de roulement (3, 3') que sur la partie située librement à l'extérieur (4a) de la spire de la bande de matière (4, 4') de la chape de bande de roulement (3, 3') voisine de la spire enroulée en dernier lieu et déjà recouverte, et dans lequel on enroule ensuite définitivement la chape de bande de roulement (3, 3').

2. Procédé selon la revendication 1, **caractérisé en ce que** l'on dépose la matière électriquement conductrice en bandes séparées (5), espacées l'une de l'autre sur la périphérie de la bande de roulement.

3. Procédé selon la revendication 2, **caractérisé en ce que** l'on dépose les bandes (5) en les étendant transversalement à la direction périphérique ou sous un angle aigu par rapport à la direction périphérique.

4. Procédé selon la revendication 1, **caractérisé en ce que** les bandes sont des parties d'une bande de la matière électriquement conductrice déposée sur la périphérie de la bande de roulement, en particulier en forme de boucles ou en zigzag.

5. Procédé selon l'une quelconque des revendications 1 à 4, **caractérisé en ce que** l'on fabrique la base de bande de roulement (2) sans creux en une bande de matière composée d'un mélange de caoutchouc électriquement conducteur, dans lequel on applique des parties de bandes (5a) sur la base de bande de roulement (2).

6. Procédé selon l'une quelconque des revendications 1 à 5, **caractérisé en ce que** l'on fabrique la base de bande de roulement (2') en une bande de matière composée d'un mélange de caoutchouc électriquement non conducteur (4') et on la dépose, en laissant libre au moins un creux (9) s'étendant sur la périphérie, sur le bandage de ceinture (1) ou la couche de ceinture radialement le plus extérieure, dans lequel on enroule la chape de bande de roulement (3') sur une première partie qui s'étend jusqu'au creux (9), et on applique ensuite la matière électriquement conductrice en bandes (5) en partie sur le bandage de ceinture (1) ou la couche de ceinture radialement le plus extérieure et en partie sur la/les spire (s) de la base de bande de roulement (2') et de la chape de bande de roulement (3') se trouvant près du creux.

7. Procédé selon l'une quelconque des revendications 1 à 6, **caractérisé en ce que** l'on enroule la chape de bande de roulement (2') en plusieurs couches, en particulier en deux couches.

8. Procédé selon l'une quelconque des revendications 1 à 7, **caractérisé en ce que** la matière électriquement conductrice contient des particules électriquement conductrices.

9. Procédé selon la revendication 8, **caractérisé en ce que** les particules électriquement conductrices sont des particules de suie, des nanotubes de carbone, des fibres de carbone ou d'autres particules électriquement conductrices, en particulier des nanoparticules.

10. Procédé selon l'une quelconque des revendications 1 à 9, **caractérisé en ce que** l'on dépose la matière électriquement conductrice sous forme de poudre.

11. Procédé selon l'une quelconque des revendications 1 à 9, **caractérisé en ce que** la matière électriquement conductrice est une dispersion avec un milieu de dispersion liquide.

12. Procédé selon la revendication 11, **caractérisé en ce que** le milieu de dispersion liquide est une huile, en particulier une huile de colza, une huile MES, une huile TDAE, une huile RAE ou une huile de paraffine.

13. Pneu de véhicule avec une bande de roulement présentant une base de bande de roulement électriquement conductrice (2) et une chape de bande de roulement électriquement non conductrice (3), qui est fabriqué par le procédé selon une ou plusieurs des revendications 1 à 12.

14. Pneu de véhicule avec une bande de roulement présentant une base de bande de roulement électriquement non conductrice (2) et une chape de bande de roulement électriquement non conductrice (3), qui est fabriqué par le procédé selon une ou plusieurs des revendications 1 à 12.
